Europäisches Patentamt

European Patent Office

Office européen des brevets

(19)

(11) Veröffentlichungsnummer : **0 038 027**
**B1**

(12)

# EUROPÄISCHE PATENTSCHRIFT

(45) Veröffentlichungstag der Patentschrift :
**17.10.84**

(21) Anmeldenummer : **81102682.2**

(22) Anmeldetag : **09.04.81**

(51) Int. Cl.³ : **G 06 K  9/20**

(54) **Verfahren und Vorrichtung zum Lesen und Dekodieren von standardisierten Klarschriftzeichen an Gegenständen.**

(30) Priorität : **16.04.80 DE 3014513**

(43) Veröffentlichungstag der Anmeldung :
**21.10.81 Patentblatt 81/42**

(45) Bekanntmachung des Hinweises auf die Patenterteilung : **17.10.84 Patentblatt 84/42**

(84) Benannte Vertragsstaaten :
**AT BE CH DE FR GB IT LI LU NL SE**

(56) Entgegenhaltungen :
**DE-A- 2 338 561**
**FR-A- 2 269 290**
**US-A- 3 525 982**
**US-A- 3 831 146**
**US-A- 3 947 817**
**US-A- 3 993 865**

(73) Patentinhaber : **Scantron GmbH & Co. Elektronische
Lesegeräte KG
Legienstrasse 14
D-6230 Frankfurt/Hoechst (DE)**

(72) Erfinder : **Wevelsiep, Klaus, Dr.
Fuchstanzstrasse 11
D-6239 Kriftel (DE)**
Erfinder : **Sturm, Bernhard
Hauptstrasse 34
D-6384 Schmitten/Ts. 2 (DE)**
Erfinder : **Scholze, Hans, Dipl.-Kfm.
Phil. Holzmann-Strasse 27
D-6072 Dreieich (DE)**

(74) Vertreter : **Eisenführ & Speiser
Martinistrasse 24
D-2800 Bremen 1 (DE)**

**Beschreibung**

Die Erfindung betrifft ferner eine Vorrichtung zur Durchführung dieses Verfahrens gemäß dem Oberbegriff des Anspruchs 5.

Ein derartiges Verfahren sowie eine derartige Vorrichtung sind aus der DE-A-23 38 561 bekannt. Wesentlich bei diesem bekannten Verfahren ist es dabei, daß die zu lesenden Klarschriftzeichen entsprechend der zeilensequentiellen Abtastung des gesamten Kennzeichnungsfelds als Videosignal zur Vergügung stehen, bei dem jeweils ganze Zeilenintervalle aufeinanderfolgen. Um eine Dekodierung des in dieser Form vorliegenden Videosignals in möglichst einfacher Weise zu ermöglichen, wurde gemäß der DE-A-23 38 561 eigens zu diesem Zweck eine besondere Klarschrift entwickelt, bei der die einzelnen Zeichen — im wesentlichen Ziffern — durch die Stellung von senkrecht zur Zeilenrichtung verlaufenden Balken gekennzeichet sind. Die Verteilung dieser Balken in der oberen und unteren Hälfte einer Zeichenmaske bestimmt jeweils die Bedeutung einer derart dargestellten Ziffer. Diese speziell entwickelten Klarschriftzeichen sind unhandlich groß, relativ schwer lesbar und mit den heute bekannten und genormten Klarschriftzeichen nicht kompatibel.

Aus der US-A-3 947 817 ist ferner ein System zum Lesen von standardisierten Klarschriftzeichen bekannt, bei dem in die Spitze einer Lesepistole eine Diodenmatrix eingesetzt ist, deren Größe die vorgegebene Größe der Zeichenmaske heute gängiger Klarschriftzeichen, von OCR-A bzw. OCR-B Zeichen am Rand überlappt. Zur Durchführung eines Lesevorgangs wird die Diodenmatrix von Hand über die zu lesenden Datenspuren hinwegbewegt, welche die zur Preis- oder Warenauszeichnung erforderlichen OCR-A-Zeichen enthält. Während die Datenspur von Hand überstrichen wird, wird die Diodenmatrix mit einem relativ hochfrequenten Lesetakt punktseriell zeilenweise abgefragt. Es wird dabei ein Videosignal abgegeben, welches zeitlich nacheinander die Hell/Dunkelinformation der Rasterpunkte nacheinander abgefragter Zeilen der Diodenmatrix enthält. Bei jeder neuen Abfragung der Diodenmatrix befindet sich — aufgrund der Bewegung der Lesepistole — die Diodenmatrix jeweils über einem anderen Teilbereich der Datenspur, der beim aktuellen Lesetakt gelesen wird. Aufgrund des relativ hochfrequenten Lesetaktes überlappen sich die aufeinanderfolgend gelesenen Teilbereiche der Datenspur und werden in dieser Sequenz dem Dekoder zugeführt, der das derart aufbereitete Videosignal dekodiert und ein den gelesenen Zeichen entsprechendes Anzeigesignal — in einem der bekannten Standardkodes — abgibt.

Aufgrund der ganz unterschiedlichen Lesetechnik, die bei dem gemäß der DE-A-23 38 561 bekannten automatischen omnidirektionalen Leseverfahren und dem Handpistolen-Leseverfahren gemäß der US-A-3 947 817 eingesetzt wird, ist es bisher nicht möglich, die Entwicklung und Erfahrung des in der Praxis schon erprobten Pistolenlesesystems auf das automatische omnidirektionale Leseverfahren zu übertragen. Insbesondere ist es daher bisher nicht möglich, mit dem Verfahren nach der DE-A-23 38 561 auch OCR-Klarschriftzeichen dekodieren zu können, da ein Dekoder fehlt, der das gewonnene Videosignal dekodieren kann.

Aus der FR-A-2 269 290 ist es bekannt, begrenzte Zonen eines standardisierte Klarschriftzeichen enthaltenden Dokumentes aufeinanderfolgend zu lesen, das Videosignal in digitale Datenwörter umzusetzen und diese in einem Zwischenspeicher zu speichern. Die einzelnen, sich nicht überlappenden Zonen können dann in gewünschter Reihenfolge aus dem Zwischenspeicher ausgelesen und dekodiert werden. Die einzelnen Zonen des Dokumentes können zum Beispiel jeweils einem Klarschriftzeichen entsprechen.

Aufgabe der Erfindung ist es, ein Verfahren und eine Vorrichtung der eingangs genannten Art derart weiterzubilden, dass standardisierte Klarschriftzeichen in einfacher Weise unter Verwendung von Dekodern gelesen und dekodiert werden können, die bei bekannten Handpistolen-Leseverfahren üblich sind und eine überlappende Folge von Bildern dekodieren.

Diese Aufgabe wird erfindungsgemäße bei einem Verfahren der eingangs genannten Art dadurch gelöst, daß im Lesebetrieb (a) die Amplitude des Videosignals seriell an periodisch aufeinanderfolgenden diskreten Zeitpunkten in binäre Datenwörter kodiert wird, die den Hell/Dunkelwert entsprechender Rasterpunkte des Datenfeldes kennzeichnen, (b) die Datenwörter seriell und zeilensequentiell in eine Speichermatrix eingelesen werden, wobei aufeinanderfolgende Speicherplätze einer Speichermatrix-Zeile gleich aufeinanderfolgenden Rasterpunkten einer betreffenden Rasterzeile des Leserasters entsprechen, (c) und anschließend sich überlappende Teilbereiche der Speichermatrix, deren Größe gleich der Maske eines Zeichens entspricht, in einem vorgegebenen Lesetakt sequentiell in Zeiten- oder Spaltenrichtung ausgelesen und dekodiert werden.

Die Aufgabe wird ferner mittels einer Vorrichtung gemäß Anspruch 5 gelöst.

Die Vorteile der Erfindung liegen insbesondere darin, daß das Kennzeichnungsfeld in ein Abtastzeilen- und Spaltenraster zerlegt wird, daß den einzelnen Rasterpunkten binäre Datenwörter entsprechen, welche den Hell/Dunkelwert des jeweiligen Rasterpunkts $x$, $y$ kennzeichnen, daß die den Rasterpunkten $x$, $y$ zugeordneten Datenwörter in eine entsprechend zeilen- und spaltenorganisierte Speichermatrix eingelesen und zwischengespeichert werden, so daß das optische Hell/Dunkelmuster des Kennzeichnungsfelds in Form binär kodierter Datenwörter in der Speichermatrix abgebildet ist. Anschließend werden sich überlappende Teilbereiche der Speichermatrix in einem vorgegebenen Lesetakt sequentiell ausgelesen und dekodiert. Die Größe der Teilbereiche entspricht der Maske eines Zeichens. In der vom Speicher ausgelesenen Form ist die Information mit hoher Redundanz von einem OCR-Dekoder dekodierbar. Insbesondere ist die Information so aufbereitet, daß sie von den OCR-Dekodern der Pistolenlesesysteme leicht dekodiert werden kann. Erfindungsgemäß wird dadurch das automatische omnidirektionale Leseverfahren kompatibel mit dem auf dem Markt erhältlichen Pistolenlesesystem.

Um die volle Kompatibilität mit dem Dekoder des Pistolen-Lesesystems zu erreichen, werden bevorzugt die Speicherplätze der ausgelesenen Teilbereiche der Speichermatrix punkt- und zeilensequentiell ausgelesen, d. h. es werden nacheinander die Speicherplätze der ersten Zeile, anschließend der zweiten Zeile, etc. ausgelesen und als ein serielles Videosignal dem Dekoder zugeführt. Der Lesetakt, und — da die Zeilen- und Spaltenzahl der Teilbereich vom eingesetzten Dekoder vorgegeben ist — auch der Zeilentakt und der Spaltentakt werden vom Dekoder bzw. einer separaten Auslese-Taktsteuerung vorgegeben.

Die in den Datenspuren benachbarten Zeichen des Kennzeichnungsfelds werden in der Speichermatrix in Zeilen- bzw.-Spaltenrichtung benachbart abgespeichert. Bevorzugt werden dabei vorgegebene unbedruckbare Bereiche des Kennzeichnungsfelds ausgeblendet, so daß in die Speichermatrix jeweils nur die Datenwörter der Rasterpunkte der bedruckbaren Zeichenfelder abgespeichert sind. Die ausgelesenen Teilbereiche der Speichermatrix werden in Zeilen- bzw. Spaltenrichtung von Zeichen zu Zeichen fortschreitend ausgelesen und dem Dekoder zugeführt. Aufeinanderfolgende auszulesende Teilbereiche der Speichermatrix sind gegeneinander bevorzugt jeweils um eine Matrixspalte bzw. Matrixzeile — d. h. um einen Speicherplatz in Zeilen- bzw. Spaltenrichtung — gegeneinander versetzt.

Durch das erfindungsgemäße Verfahren wird also das zu lesende Kennzeichnungsfeld in Teilbereichen quasi konform in dem Speicher abgebildet. Anschließend wird durch den Ausleseschritt die Information einem OCR-Dekoder bekannter Handpistolen-Lesesysteme in der Form dargeboten, in welcher der Dekoder sie ansonsten von der mit der Hand bewegten und im Lesetakt getakteten Diodenmatrix in der speziellen Lesepistole erhält. Es wird also durch die Zwischenspeicherung und anschließende Auslesung die spezielle Informationsaufbereitung der handgeführten Pistolen-Lesesysteme simuliert.

Vorteilhafte Weiterbildungen der Erfindung sind durch die Merkmale der Unteransprüche gekennzeichnet.

Im folgenden wird eine Ausführungsform der Erfindung anhand der Zeichnung näher erläutert. Es zeigen :

Figur 1 ein zu lesendes Kennzeichnungsfeld, welches z. B. als Preisetikett auf dem Bildfenster erscheint ;

Figur 2 eine graphische Darstellung eines Teils der Speichermatrix, der zur Abspeicherung der in einer Datenspur enthaltenen Zeichen vorgesehen ist ;

Figur 3 den Einleseteil der erfindungsgemäßen Schaltung ;

Figur 4 den Ausleseteil der erfindungsgemäßen Schaltung ; und

Figur 5 die zum Auslesen der Speichermatrix benötigten Auslesetaktimpulse.

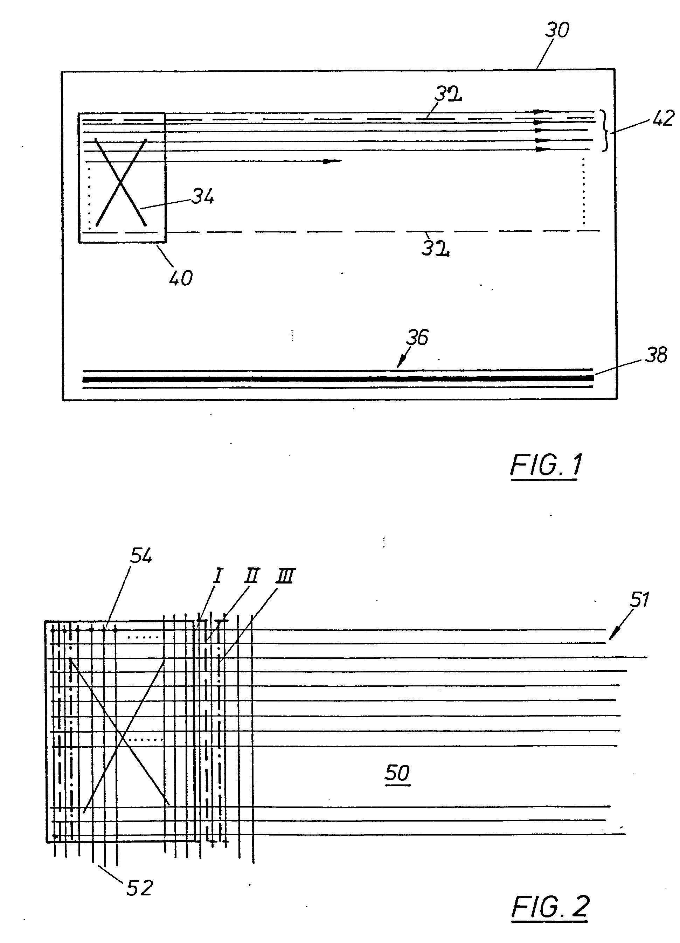

Fig. 1 zeigt ein Beispiel eines zu lesenden Kennzeichnungsfelds, das z. B. aus einem Preisetikett 30 besteht, welches in einer oder zwei Datenspuren 32 mehrere optisch kontrastierende Zeichen 34 einer Standard-Klarschrift, z. B. der OCR-A-Schrift oder OCR-B-Schrift, enthält. Parallel und unter der Datenspur 32 verläuft ein Kontrastlinien- oder PIC-Muster 36, welches die Position und die Orientierung der Datenspur 32 kennzeichnet und mehrere parallele Linien 38 mit unterschiedlichem Abstand und/oder Linienbreiten enthält. Gestrichelt eingetragen ist um ein Zeichen 34 herum die Größe der Zeichenmaske 40, die sich aus der Größe der Zeichen 34 ergibt bzw. selbst normiert ist. Gestrichelt eingetragen ist ferner eine Zeilenfolge 42, mit der das Leseraster das Etikett 30 abtastet.

In dem ersten Verfahrensschritt wird das Bildfenster mit einem relativ weitzeiligen Suchraster unter verschiedenen Suchwinkeln solange abgetastet, bis mehrere Rasterzeilen das PIC-Muster 38 schneiden und eine Erkennung des PIC-Musters 38 möglich ist. In einem zweiten Verfahrensschritt wird dann der Schnittwinkel zwischen diesen Rasterzeilen und dem PIC-Muster, d. h. und der Richtung der Datenspuren 32 bestimmt. In einem dritten Verfahrensschritt wird das Kennzeichnungsfeld 30 in Richtung der Datenspur 32 mit einem engzeiligen Leseraster 42 abgetastet, es werden die in der Datenspur 32 enthaltenen Zeichen 34 zeilensequentiell gelesen und als entsprechendes Videosignal einem Dekoder zugeführt. Das Videosignal enthält eine der abgetasteten Hell/Dunkel-Kontrastfolge entsprechende Amplitudenfolge. Im Videosignal erscheinen den Abtastzeilen entsprechende Zeilenintervalle seriell.

Fig. 2 zeigt einen Ausschnitt aus der Speichermatrix 50 des Speichers 4, in den die im Videosignal enthaltene Information in Form einer Abbildung eingespeichert wird. Die Speicherplätze innerhalb der Speichermatrix 50 entsprechen den Schnittpunkten von Zeilen 51 und Spalten 52. Die Amplitude des Videosignals wird seriell mit einem vorgegebenen Rastertakt an aufeinanderfolgenden diskreten Zeitpunkten in binäre Datenwörter kodiert. Da jedem dieser diskreten Rasterzeitpunkte ein entsprechender Rasterpunkt im Datenfeld entspricht, kennzeichnen die binären Datenwörter somit den Hell/Dunkelwert entsprechender Rasterpunkte des Datenfelds 30. Diese Datenwörter werden seriell und zeilensequentiell in die Speichermatrix 50 eingelesen. Dabei werden die zeitlich aufeinanderfolgenden Datenwörter eines Zeilenintervalls des Videosignals in aufeinanderfolgende Speicherplätze 54 einer Speichermatrix-Zeile 51 eingelesen, und die Datenwörter im nachfolgenden Zeilenintervall des Videosignals werden in die Speicherplätze einer benachbarten Speichermatrix-Zeile eingelesen. Es erfolgt dadurch sozusagen eine digitale Abbildung des zeilenweise abgetasteten Kennzeichnungsfelds in eine zeilen- und spaltenorganisierte Speichermatrix.

Anschließend werden sich überlappende Teilbereiche I und II, III ... der Speichermatrix, deren Größe gleich der Maske eines Zeichens entspricht, in einem vorgegebenen Lesetakt sequentiell ausgelesen und dekodiert. Da die gelesene Datenspur(en) zeilengetreu in die Speichermatrix 50 eingelesen ist, so daß benachbarte Druckzeichen in Zeilenrichtung benachbart abgespeichert sind, werden die Teilbereiche I, II, III der Speichermatrix 50 in Zeilenrichtung von Zeichen zu Zeichen fortschreitend und einander überlappend ausgelesen. Aufeinanderfolgende Teilbereiche I, II bzw. II, III etc. sind um jeweils eine Matrixspalte, gegebenenfalls jedoch auch um eine feste Zahl von Matrixspalten gegeneinander versetzt. Die Startadresse der einzelnen Teilbereiche wandert also in vorgegebenem Lesetakt durch die nebeneinander liegenden Speicherplätze einer Speicherzeile hindurch.

Die Speicherplätze innerhalb der einzelnen Teilbereiche I, II, III, etc. werden punkt- und zeilensequentiell ausgelesen, die Leserichtung verläuft gleichgerichtet oder entgegengesetzt zu derjenigen Richtung, in der die Startadresse durch ihre Zeile hindurchläuft.

Bei einer bevorzugten Ausführungsform der Erfindung besitzen z. B. die einzelnen Teilbereiche der Speichermatrix 38 Zeilen und 14 Spalten. Der Speicherbereich für einzelne Zeichen beträgt z. B. 19 Zeilen und z. B. 8 oder 10 Spalten. Die ausgelesenen Teilbereiche I, II etc. überlappen somit an dem Rand die entsprechenden Zeichenbereiche. Der Speicher gibt an seinem Datenausgang eine Folge von binären Datenwörtern ab, die nacheinander aus der ersten Zeile, anschließend aus der zweiten Zeile, anschließend aus der dritten Zeile etc. ausgelesen sind. Dieses Signal wird dem Dekoder 16 zugeführt, der ein an sich bekannter OCR-Dekoder ist und in den Handlesepistolen-Systemen für OCR-A- bzw. OCR-B-Schrift eingesetzt ist.

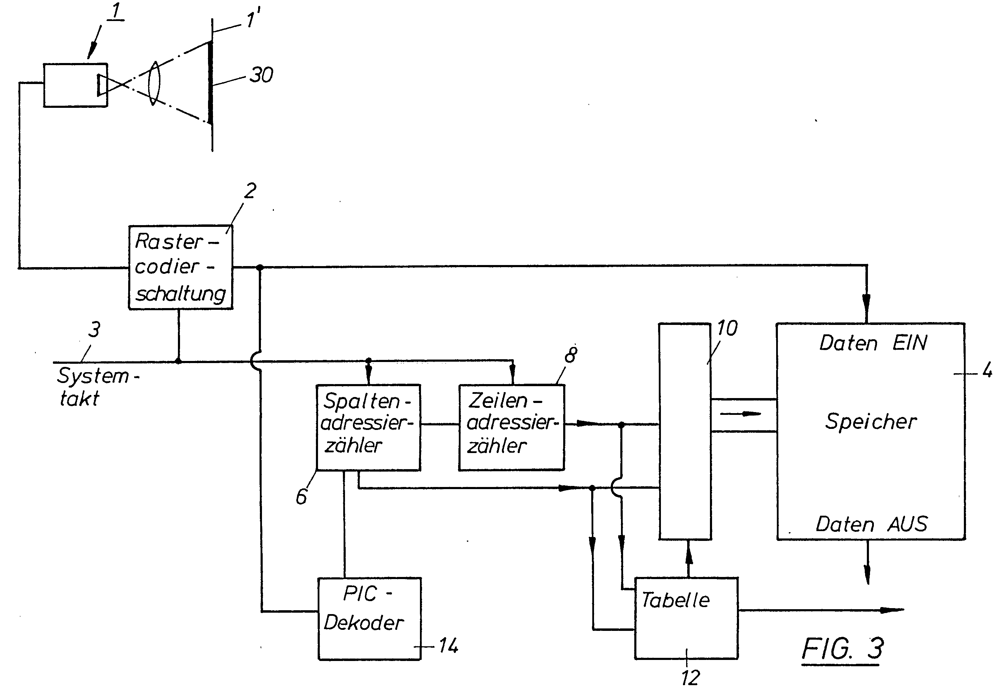

Fig. 3 zeigt ein Blockschaltbild des Einleseteils der erfindungsgemäßen Vorrichtung. Auf dem Bildfenster 1' der Vorrichtung erscheint in beliebiger Position und Orientierung und zu einer beliebigen Zeit ein Datenfeld 30, z. B. ein Preisetikett. Mittels eines opto-elektronischen Wandlersystems 1 wird das Datenfeld 30 auf das Target des opto-elektronischen Wandlers 1 abgebildet. Das Target wird von einem Ablenksystem (nicht dargestellt) in einem zeilensequentiellen Raster abgetastet, vergl. Fig. 1, und am Ausgang des opto-elektronischen Wandlers wird ein elektrisches Videosignal abgegeben, welches das Kontrastmuster der abgetasteten Zeilen sequentiell als eine entsprechende Amplitudenfolge wiedergibt. Die Vorrichtung enthält einen PIC-Dekoder 14 zum Erkennen abgetasteter PIC-Muster. Das Ablenksystem enthält einen ersten Ablenkgenerator (nicht dargestellt) zur periodischen Abgabe eines Zeilenablenksignals (Ablenkung in x-Richtung), und einen zweiten Ablenkgenerator (nicht dargestellt) zur Abgabe eines Zeilenfortschaltsignals (Ablenkung in y-Richtung) am Ende jedes Zeilenablenksignals.

Am Ausgang des opto-elektrischen Wandlers 1 ist eine Rasterkodierschaltung 2 nachgeschaltet, die an aufeinanderfolgenden diskreten Zeitpunkten, welche durch den Systemtakt 3 vorgegeben werden, die Amplitude des Videosignals in binäre Datenwörter kodiert, welche den Hell/Dunkelwert entsprechender Rasterpunkte des Kennzeichnungsfelds kennzeichnen.

Der Ausgang der Rasterkodierschaltung 2 ist mit dem Dateneingang eines Speichers 4 verbunden, der die zeilen- und spaltenförmig organisierte Speichermatrix 50 enthält.

Vom Systemtakt 3 wird ferner eine Einlese-Adressier-Steuerung 6, 8, 12 getaktet, die mit dem Adresseneingang 10 des Speichers 4 verbunden ist und taktsynchron mit der Erzeugung der Datenwörter eine Adressierung vorgegebener Speicherplätze vornimmt. Die Einlese-Adressiersteuerung enthält einen Spaltenadressierzähler 6 und einen Zeilenadressierzähler 8. Der Spaltenadressierzähler 6 zählt die Impulse des Systemtakts, welcher von irgendeinem Taktgenerator erzeugt wird, und gibt als Zählerstand die Spaltenadresse des aktuellen Speicherplatzes an den Adressiereingang 10 des Speichers ab. Der Zeilenadressierzähler 8 erhält nach jeweils einer festen Anzahl von abgegebenen Spaltenadressier-Impulsen vom Spaltenadressierzähler 6 einen Zeilenfortschaltimpuls, der die Zeilenadresse des aktuellen Speicherplatzes um den Wert 1 inkrementiert. Während des nächsten Zeilenintervalls werden die Speicherplätze innerhalb der aktuellen Speicherzeile 51 nacheinander durch taktsynchron eingehende Datenwörter belegt. Die Abgabe eines Zeilenfortschaltimpulses an den Zeilenadressierzähler, und damit die Inkrementierung der Zeilenadresse, erfolgt synchron mit der Abgabe des Zeilenfortschaltimpulses, die der Ablenkgenerator des optoelektrischen Wandlers 1 an das Ablenksystem abgibt, um eine neue Zeile des Datenfelds abzutasten. Die Zeilenintervalle des am Ausgang des optoelektronischen Wandlers abgegebenen Videosignals werden somit zeilengetreu in die Zeilen der Speichermatrix eingelesen.

Die Einlese-Adressiersteuerung enthält ferner eine Adressen-Selektionsschaltung 12 in Form einer Tabelle, in der die Adressen derjenigen Rasterpunkte des Kennzeichnungsfelds 30 gespeichert sind, welche gemäß der gewählten Aufteilung nicht bedruckt sind. Wenn die Adresse eines derartigen Rasterpunktes von dem Spalten-Adressierzähler 6 und dem Zeilen-Addressierzähler 8 in die Tabelle 12 eingegeben werden, gibt die Tabelle 12 ein Ausgangssignal an den Adressiereingang 10 des Speichers ab, wodurch die Inkrementierung der aktuellen Adresse verhindert wird. Dadurch ist gewährleistet, daß der Platz der Speichermatrix 50 nur von Bereichen des Kennzeichnungsfelds 30 belegt wird, in denen Information aufgedruckt ist.

Die Einlese-Adressiersteuerung wird nur dann aktiviert, wenn der PIC-Dekoder 14 innerhalb mehrerer aufeinanderfolgender Abtastzeilen ein PIC-Muster erkennt und dann ein PIC-Erkennungssignal PIC-OUT an den Spalten-Adressierzähler 6 abgibt.

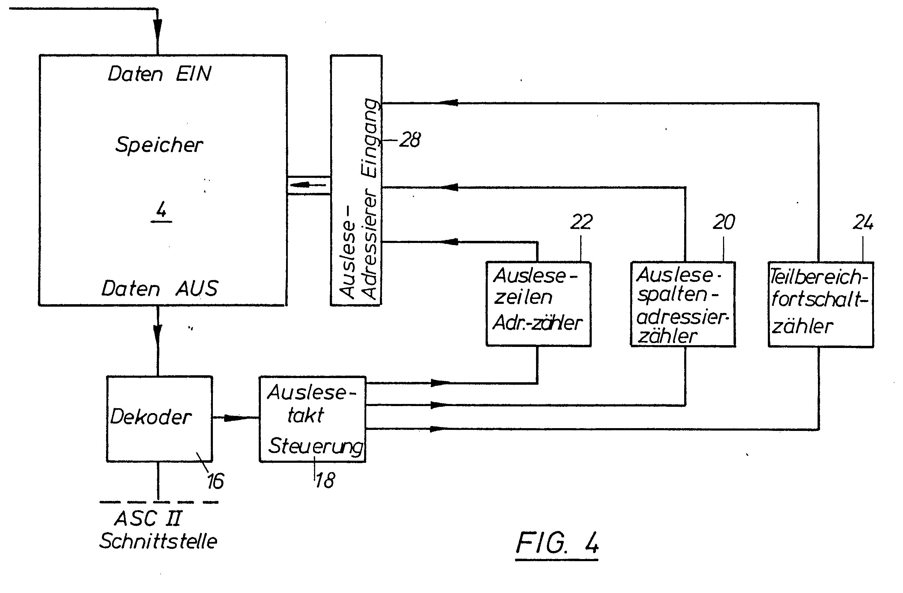

Die Auslese-Adressiersteuerung, vgl. Fig. 4, enthält eine eigene Auslesetaktsteuerung 18, die Spalten-Taktimpulse an einen Auslese-Spaltenadressierzähler 20 abgibt. Die Auslese-Taktsteuerung 18 gibt ferner Zeilen-Taktimpulse an einen Zeilen-Adressierzähler 22 ab — und inkrementiert dessen Zählerstand jeweils um den Wert 1 —, wenn der Spalten-Adressierzähler 20 eine vorgegebene Anzahl an Spaltenadressen an den ausleseseitigen Adressiereingang 28 abgegeben hat. Die Anzahl der bei einer aktuellen Zeilenadresse jeweils abgegebenen Spalten-Taktimpulse entspricht der Zahl der Spalten in einem auszulesenden Teilbereich. Besitzt der auszulesende Teilbereich der Speichermatrix, der die Speicherplätze eines Zeichens überlappend überdeckt, zum Beispiel 14 Spalten und 38 Zeilen, so wird jeweils nach 14 Spaltentaktimpulsen ein Zeilentaktimpuls abgegeben, der die Zeilenadresse um den Wert 1 inkrementiert. Nach Adressierung aller Zeilen des auszulesenden Teilbereichs wird ein Startadressen-Fortschaltimpuls von einem Teilbereich-Fortschaltzähler 24 abgegeben, der mit dem Zeilenadressierzähler 22 synchronisiert ist, und es wird dadurch die Startadresse für den nächsten auszulesenden Teilbereich, z. B. Teilbereich II, an den Adressiereingang 28 abgegeben. Werden die einzelnen Teilbereiche, I, II, III in Richtung der Speicherzeilen überlappend ausgelesen, so erfolgt die Fortschaltung der Startadresse des auszulesenden Teilbereichs bei konstanter Zeilenadresse, und es wird jeweils nur die Spaltenadresse z. B. um den Wert 1 inkrementiert.

Während der Auslese-Adressierung gibt der Datenausgang des Speichers taktsynchron den Inhalt der adressierten Speicherplätze, d. h. die den Hell/Dunkelwert eines Rasterpunkts kennzeichnenden binären Datenwörter, an einen Dekoder 16 ab, der an seinem Ausgang z. B. eine ASCII-Schnittstelle (American Standard Code for Information Interchange) besitzt und entsprechend kodierte Zeichensignale abgibt. Bei dem Dekoder 16 handelt es sich um einen bekannten OCR-Dekoder, der bei Handlesepistolen-Systemen zur Klarschrifterkennung eingesetzt ist.

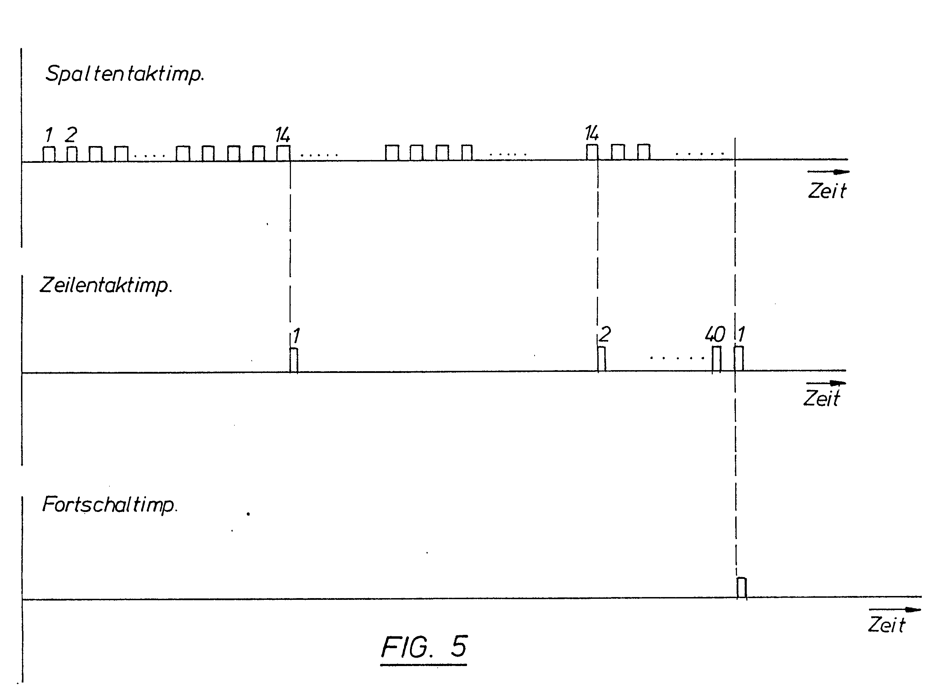

Fig. 5 zeigt den zeitlichen Verlauf der von der Auslesetakt-Steuerung abgegebenen Taktimpulse. Jeweils nach einer festen Anzahl an Spaltentaktimpulsen wird ein Zeilentaktimpuls abgegeben, und nach einer vorgegebenen Anzahl an Zeilentaktimpulsen — im vorliegenden Beispiel nach 40 Zeilentaktimpulsen — wird ein Fortschaltimpuls an den Teilbereich-Fortschaltzähler 24 abgegeben, dessen Zählerstand entsprechend inkrementiert und an den Auslese-Adressiereingang 28 abgegeben wird.

**Ansprüche**

1. Verfahren zum Lesen und Dekodieven von standandisierten Klarschriftzeichen an Gegenständen, die in beliebiger Position und Orientierung und zu beliebigen Zeiten auf einem Bildfenster erscheinen und auf einer dem Bildfenster zugewandten Oberfläche ein Kennzeichnungsfeld aufweisen, das in mindestens einer Datenspur standardisierte Klarschriftzeichen und mindestens ein Kontrastlinienmuster (PIC) umfaßt, welches die Position und die Orientierung der Datenspur kennzeichnet und mehrere Linien mit unterschiedlichen Abständen und/oder Linienbreiten enthält, bei dem das Bildfenster über eine opto-elektronische Wandlung zeilensequentiell abgetastet wird und ein dem abgetasteten Kontrastlinienmuster und den klarschriftzeichen entsprechendes Videosignal erzeugt wird, wobei das Bildfenster im ersten Verfahrensschritt, dem Suchbetrieb, mit einem Suchraster solange abgetastet wird, bis das Kontrastlinienmuster von mehreren Rasterzeilen geschnitten und erkannt wird, im zweiten Verfahrensschritt der Schnittwinkel zwischen der Datenspur und den Rasterzeilen des Suchrasters bestimmt wird, und im dritten Verfahrensschritt, dem Lesebetrieb, das Kennzeichnungsfeld in Richtung der bzw. senkrecht zur Datenspur in einem Leseraster abgetastet wird, und die in der Datenspur enthaltenen Zeichen gelesen und als Videosignal einem Dekoder zur Dekodierung zugeführt werden, dadurch gekennzeichnet, daß im Lesebetrieb

(a) die Amplitude des Videosignals seriell an periodisch aufeinanderfolgenden diskreten Zeitpunkten in binäre Datenwörter kodiert wird, die den Hell/Dunkelwert entsprechender Rasterpunkte (x, y) des Kennzeichnungsfeldes kennzeichnen,

(b) die Datenwörter seriell und zeilensequentiell in eine Speichermatrix eingelesen werden, wobei aufeinanderfolgende Speicherplätze einer Speichermatrix-Zeile gleich aufeinanderfolgenden Rasterpunkten einer betreffenden Rasterzeile des Leserasters entsprechen,

(c) und anschließend sich überlappende Teilbereiche der Speichermatrix, deren Größe gleich der Maske eines Zeichens entspricht, in einem vorgegebenen Lesetakt sequentiell in Zeilen- oder Spaltenvichtung ausgelesen und dekodiert werden.

2. Verfahren nach Anspruch 1, dadurch gekennzeichnet, daß die Speicherplätze der Teilbereiche punkt- und zeilensequentiell ausgelesen werden.

3. Verfahren nach Anspruch 1 oder 2, dadurch gekennzeichnet, daß in der Datenspur benachbarte Zeichen in der Speichermatrix in Zeilen- bzw. Spaltenrichtung benachbart abgespeichert sind.

4. Verfahren nach Anspruch 3, dadurch gekennzeichnet, daß aufeinanderfolgende Teilbereiche der Speichermatrix jeweils um eine Matrixspalte bzw. -zeile gegeneinander versetzt sind.

5. Vorrichtung zur Durchführung des Verfahrens nach einem der Ansprüche 1 bis 4, bei der das Bildfenster auf das Target eines optoelektronischen Wandlers abgebildet wird, der von einem Ablenksystem in einem zeilensequentiellen Raster abgetastet wird und an seinem Ausgang ein elektrisches Videosignal abgibt, welches das Kontrastmuster der abgetasteten Zeilen sequentiell als eine entsprechende Amplitudenfolge wiedergibt, und mit einem PIC-Decoder zum Erkennen abgetasteter Kontrastlinienmuster (PIC), welche die Position und die Orientierung der Datenspuren des Kennzeichnungsfelds kennzeichnen und mehrere Linien mit unterschiedlichen Abständen und/oder Linienbreiten enthalten, wobei das Ablenksystem einen ersten Ablenkgenerator zur periodischen Abgabe eines Zeilenablenksignals (Ablenkung in x-Richtung) und einen zweiten Ablenkgenerator zur Abgabe eines Zeilenfortschaltsignals (Ablenkung in y-Richtung) am Ende jedes Zeilenablenksignals enthält, dadurch gekennzeichnet, daß

(a) eine Videosignal-Rasterkodierschaltung (2) vorgesehen ist, die an aufeinanderfolgenden diskreten Zeitpunkten die Amplitude des Videosignals in binäre Datenwörter Kodiert, welche den Hell/Dunkelwert der entsprechenden Rasterpunkte des Kennzeichnungsfelds kennzeichnen,

(b) ein Speicher (4) mit einer zeilen- und spaltenförmig organisierten Speichermatrix und mit einer Einlese-Adress-Steuerung (6 bis 12) vorgesehen ist, welche die Datenwörter seriell und zeilenorganisiert in die Speichermatrix einliest, wobei die belegten Speicherplätze in einer Speichermatrix-Zeile gleich den Rasterpunkten der betreffenden Rasterzeile des Datenfeldes entsprechen,

(c) eine Auslese-Adress-Steuerung (18-28) vorgesehen ist, die anschließend sich überlappende Teilbereiche der Speichermatrix, welche die Größe einer Maske eines Zeichens besitzen, mit einem vorgegebenen Lesetakt sequentiell in Zeilen oder Spaltenrichtung adressiert und ausliest und dem vorgegeben organisierten Dekoder (16) passend zur Dekodierung zuführt.

6. Vorrichtung nach Anspruch 5, dadurch gekennzeichnet, daß die Rasterkodierschaltung (2) vom Systemtakt (3) getaktet wird und jeweils bei Abgabe eines Systemtaktimpulses den aktuellen Amplitudenwert des Videosignals in ein binäres Datenwort kodiert, daß die Einlese-Adressier-Steuerung einen Spaltenadressierzähler (6) und einen Zeilenadressierzähler (8) enthält, daß der Spaltenadressierzähler (6) Systemtaktimpulse (3) zählt und als Zählerstand die Spaltenadresse des aktuellen Speicherplatzes abgibt, daß der Zeilenadressierzähler (8) Zeilenfortschaltimpulse vom Spaltenadressierzähler (6) zählt und als Zeilenadresse des aktuellen Speicherplatzes abgibt, wobei die Zeilenfortschaltimpulse jeweils nach Erreichen eines vorgegebenen Zählerstands des Spaltenaddressierzählers (6) abgegeben werden, welcher der Anzahl der Spalten der Speichermatrix entsprechen, und daß während der Abgabe der Spaltenadressen und der Zeilenadressen an den Adressiereingang des Speichers die binären Datenwörter von der Rasterkodierschaltung (2) taktsynchron dem Dateneingang des Speichers (4) zur Einspeicherung in die adressierten Speicherplätze zuführbar sind.

7. Vorrichtung nach Anspruch 6, dadurch gekennzeichnet, daß die Adressierzähler (6, 8) zum Einlesen der binären Datenwörter nur aktiviert werden, wenn ein PIC-Dekoder (14) bei Vorhandensein mindestens eines PIC-Musters im Videosignal ein PIC-Erkennungssignal (PIC OUT) an den Spaltenadressierzähler (6) abgibt.

8. Vorrichtung nach Anspruch 7, dadurch gekennzeichnet, daß eine Adressen-Selektionsschaltung (12) vor dem Adressiereingang (10) des Speichers (4) vorgesehen ist, die den Einlesevorgang bei Auftreten bestimmter, von den Adressierzählern (6, 8) erzeugten Adressen unterbricht.

9. Vorrichtung nach einem der Ansprüche 5 bis 8, dadurch gekennzeichnet, daß die Auslese-Adressiersteuerung (18 bis 28) eine Auslesetaktsteuerung (18) zur Abgabe eines Spaltentakts an einen Auslese-Spaltenadressierzähler (20), und zur Abgabe eines Zeilentakts an einen Auslese-Zeilenadressierzähler (22) besitzt, wobei jeweils ein Auslese-Zeilentaktimpuls den Zeilenadressierzähler jedesmal dann inkrementiert, wenn der Spaltenadressierzähler (20) alle Spalten in dem Auslese-Teilbereich der Speichermatrix adressiert hat, und daß ein Startadresse-Fortschaltzähler (24) vorgesehen ist, der die Startadresse des auszulesenden Teilbereichs der Speichermatrix fortschaltet, nachdem vom Zeilen-Adressierzähler (22) eine entsprechende vorgegebene Anzahl an Auslese-Zeilentaktimpulsen empfangen wurde und alle Zeilen innerhalb des auszulesenden Teilbereichs der Speichermatrix adressiert worden sind.

10. Vorrichtung nach Anspruch 9, dadurch gekennzeichnet, daß die erste Startadresse, die der Fortschaltzähler (24) abgibt, dem Fortschaltzähler (24) von den Einlese-Adressierzählern (6, 8) einprogrammierbar ist.

11. Vorrichtung nach Anspruch 9 oder 10, dadurch gekennzeichnet, daß bei der Fortschaltung der Startadresse der Auszulesenden Teilbereiche der Speichermatrix bei konstanter Zeilenadresse jeweils nur die Spaltenadresse um eine Spalte inkrementiert wird.

## Claims

1. Method of reading and decoding standardised optical characters on articles, which appear in random position and orientation and at random times on an image window and comprise on a surface facing the image window an identification area which contains standardised optical characters and at least one contrasting line pattern (PIC) in at least one data track, which pattern characterises the position and the orientation of the data track and contains several lines with different spacings and/or line widths, said method including scanning the image window in line sequence through an opticoelectronic conversion and producing a video signal corresponding to the scanned contrasting line pattern and optical characters, the image window is scanned in a first method step, the search operation, with a search raster until the contrasting line pattern is cut by several raster lines and identified, while in a second method step, the cutting angle between the data track and the raster lines of the search raster is determined, and in a third method step, the reading operation, the identification area is scanned in the direction of or perpendicular to the data track in a reading raster, and the characters contained in the data track are read and fed as a video signal to a decoder for decoding, characterised in that, in the reading operation

(a) the amplitude of the video signal is serially coded at periodically succeeding discrete times into binary data words, which represent light/dark values of the corresponding raster points (x, y) of the identification area,

(b) the data words are read serially and in line sequence into a memory matrix, succeeding memory positions of a memory matrix row corresponding to equivalent raster points of a corresponding raster line of the reading raster,

(c) and thereafter overlapping regions of the memory matrix, the size of which equally corresponds to the mask of a character, are read out and decoded sequentially in line or column direction in a prescribed reading cycle.

2. Method according to claim 1, wherein the memory positions of the overlapping regions are selected sequentially pointwise and row by row.

3. Method according to claim 1 or 2, wherein symbols adjacent in the data track are stored adjacent in the memory matrix in the row and column direction, respectively.

4. Method according to claim 3, wherein succeeding overlapping regions of the store matrix are in each case staggered relatively to one another by one matrix column or matrix row.

5. Means for carrying into effect the method according to one of claims 1 to 4, in which the image window is focussed on to the target of an optico-electronic transducer, which is scanned by a deflecting system in a line by line raster and delivers at its output an electric video signal which reproduces the contrast pattern of the scanned lines sequentially as a corresponding amplitude sequence, and with a PIC decoder for identifying scanned contrast line patterns (PIC), which characterise the position and the orientation of the data tracks of the identifying field and contain several lines with different spacings and/or line widths, the deflecting system containing a first deflecting generator for the periodic delivery of a line-deflecting signal (deflection in the x-direction) and a second deflecting generator for delivering a line-advancing signal (deflection in the y-direction) at the end of each line-deflecting signal, wherein

(a) a video signal raster-coding circuit (2) is provided, which, at successive discrete intervals of time, codes the amplitudes of the video signal in binary data words, which represent the lightdark value of the corresponding raster points of the identification field,

(b) a memory (4) with a memory matrix organised in row and column form and with a read-in and address control means (6 to 12), by which the data words are read serially and in line-organised manner into the memory matrix, the occupied memory positions in a memory matrix row corresponding to the raster points of the corresponding raster line of the identification field,

(c) a read-out address control means (18 to 28) is provided, which thereafter addresses and reads overlapping regions of the memory matrix, which have the size of a mask of a character with a prescribed reading cycle sequentially in the row or column direction and feeds the pregiven organised decoder (16) in appropriate manner for the decoding.

6. Means according to claim 5, wherein the rastercoding circuit (2) is clocked by the system clock (3) and, in each case, with delivery of a system clock pulse, codes the actual amplitude value of the video signal into a binary data word, wherein the read-in and addressing control means includes a column-addressing counter (6) and a row-addressing counter (8), wherein the column-addressing counter (6) counts system clock pulses and delivers its count as the column address of the actual store position, wherein the row-addressing counter (8) counts row step up pulses of the column-addressing counter (6) and delivers its count as row address of the actual memory position, the row step up pulses being delivered after the column-addressing counter (6) reached a pregiven count, which corresponds to the number of the columns of the memory matrix, and wherein, during the delivery of the column addresses and the row addresses to the addressing input of the memory, the binary data words are fed from the raster-coding circuit (2) in clock-synchronism to the data input of the memory (4) for being stored in the addressed memory positions.

7. Means according to claim 6, wherein the addressing counters (6, 8) for reading in the binary data words are only activated when a PIC decoder (14), with the presence of at least one PIC pattern in the video signal, delivers a PIC identification signal (PIC OUT) to the column addressing counter (6).

8. Means according to claim 7, wherein an address selection circuit (12) is provided before the addressing input (10) of the memory (4), which interrupts the reading-in operation with the occurrence of certain addresses produced by the addressing counters (6, 8).

9. Means according to one of claims 5 to 8, wherein the reading-out addressing control means (18 to 28) has a reading-out clock means (18) for the delivery of a column clock to a reading-out column addressing counter (20) and for the delivery of a row clock to a reading-out row addressing counter (22), in which a reading-out row clock pulse increments the row addressing counter each time when the column addressing counter (20) has addressed all columns in the reading-out partial zone of the memory matrix, and wherein a start address step up counter (24) is provided, which steps forward the starting address of that partial region of the memory matrix which is to be read after a corresponding prescribed number of reading-out row clock pulses has been received by the row addressing counter (22) and all rows within that partial region of the memory matrix which is to be read have been addressed.

10. Means according to claim 9, wherein the first start address which the step up counter (24) delivers can be programmed into said counter (24) by the reading-in addressing counters (6, 8).

11. Means according to claim 9 or 10, wherein the column address is incremented one by one with constant row address when stepping forward of the starting address of the partial regions to be read of the memory matrix.

**Revendications**

1. Procédé pour la lecture et le décodage d'écriture en caractères clairs standardisés sur des objets, qui apparaissent sur une fenêtre de cadrage dans une position et une orientation quelconques et qui présentent un champ de marquage sur une surface dirigée vers la fenêtre de cadrage, ce champ comprenant des caractères d'écriture en clair standardisés dans au moins une piste de données et au moins un modèle de lignes de contraste (PIC) qui caractérise la position et l'orientation de la piste de données et qui comprend plusieurs lignes à intervalles différents et/ou de largeurs différents, procédé dans lequel la fenêtre de cadrage est explorée par conversion opto-électronique avec balayage séquentiel en lignes et on produit un signal vidéo qui correspond au modèle de lignes de contraste exploré et aux caractères d'écriture en clair la fenêtre de cadrage étant, au cours de la première étape du procédé constituant le fonctionnement de recherche, explorée avec une trame de recherche, jusqu'à ce que le modèle de lignes de recherches soit recoupé par plusieurs lignes de trame et reconnu, l'angle d'intersection entre la piste de données et les lignes de trame de la trame de recherche étant déterminé au cours de la seconde étape du procédé, le champ de marquage étant, au cours de la troisième étape du procédé constituant le fonctionnement de lecture, exploré par une trame de lecture dans la direction de la piste de données ou perpendiculairement les caractères contenus dans la piste de données étant lus et envoyés en tant que signal vidéo à un décodeur pour le décodage, caractérisé en ce qu'en fonctionnement de lecture :

(a) l'amplitude du signal vidéo obtenu est codée en série en mots de données binaires à des instants discrets se succédant périodiquement, mots caractérisant les points de trame (X, Y) du champ de marquage correspondant à la valeur clair/obscur,

(b) les mots de données sont mémorisés en série et ligne par ligne dans une matrice de mémoire, des emplacements mémoire successifs d'une ligne de la matrice de mémoire correspondant exactement à des points de trame successifs d'une ligne de trame intéressée de la trame de lecture,

(c) et immédiatement après, des zones partielles de la matrice de mémoire, qui se recouvrent et dont la dimension correspond justement au masque d'un caractère lu, sont extraites séquentiellement de la mémoire, dans la direction des lignes ou la direction des colonnes selon un rythme de lecture prédéterminé et décodé.

2. Procédé selon la revendication 1, caractérisé en ce que les emplacements mémoire des zones partielles sont extraits séquentiellement par points et par lignes.

3. Procédé selon la revendication 1 ou la revendication 2, caractérisé en ce que des caractères voisins dans la piste de données sont mémorisés dans la matrice de mémoire en étant voisins dans la direction des lignes ou dans la direction des colonnes.

4. Procédé selon la revendication 3, caractérisé en ce que des zones partielles successives de la matrice de mémoire sont à chaque fois décalées entre elles d'une colonne de matrice ou d'une ligne de matrice.

5. Dispositif pour la mise en pratique du procédé selon l'une des revendications 1 à 4, dans lequel la fenêtre de cadrage est reproduite sur l'objectif d'un convertisseur opto-électronique qui est exploré par un système de balayage dans une trame à séquence de lignes et qui fournit à sa sortie un signal vidéo électrique, qui reproduit séquentiellement le modèle de contraste des lignes explorées sous forme d'une suite d'amplitudes appropriée, et avec un décodeur PIC pour reconnaître des modèles de lignes de contraste explorées (PIC), qui caractérisent la position et l'orientation des pistes de données du champ de marquage, et qui comprennent plusieurs lignes avec des interlignes différents et/ou des largeurs de lignes différents, le système de balayage comportant un premier générateur de balayage pour l'envoi périodique d'un signal de balayage de lignes (balayage dans la direction X) et un second générateur de balayage pour l'envoi d'un signal de passage de ligne (balayage de la direction Y) à la fin de chaque signal de balayage de lignes, caractérisé en ce que :

(a) il est prévu un circuit codeur de trame de signal vidéo (2), qui code l'amplitude du signal vidéo en mots de données binaires à des instants discrets successifs, mots de données caractérisant la valeur clair/obscur des points de trame correspondants du champ de marquage,

(b) il est prévu une mémoire (4) avec une matrice de mémoire organisée en forme de lignes et de colonnes et avec une commande d'adresses de mémorisation (6 à 12), qui mémorise les mots de données dans la matrice de mémoire en série et avec une organisation en lignes, les emplacements mémoire occupés dans une ligne de matrice de mémoire correspondant exactement aux points de trame de la ligne de trame intéressée du champ de données,

(c) il est prévu une commande d'adresses d'extraction (18-28) qui, immédiatement après, adresse et extrait des zones partielles de la matrice de mémoire, qui se recouvrent et dont la dimension correspond justement au masque d'un caractère séquentiellement selon un rythme de lecture prédéterminé, et les envoie en étant adaptées pour le décodage au décodeur (18) organisé prédéterminé.

6. Dispositif selon la revendication 5, caractérisé en ce que le circuit codeur de trame (2) est cadencé par l'horloge (3) du système et code à chaque émission d'une impulsion de l'horloge du système la valeur actuelle d'amplitude du signal vidéo en mot de données binaire, en ce que la commande d'adresses d'extraction comporte un compteur d'adresses de colonnes (6) et un compteur d'adresses de lignes (8), en ce que le compteur d'adresses de colonnes (6) compte des impulsions d'horloge du système (3) et fournit sous la forme de niveau de comptage l'adresse de colonne du présent emplacement mémoire, en ce que le compteur d'adresses de lignes (8) compte des impulsions de passage de lignes provenant du compteur d'adresses de colonnes (6) et fournit l'adresse de ligne du présent emplacement mémoire, les impulsions de passage de lignes étant émises chaque fois qu'est atteint un niveau de comptage prédéterminé du compteur d'adresses de colonnes (6), niveau correspondant au nombre des colonnes de la matrice de mémoire et en ce que pendant la fourniture des adresses de colonnes et des adresses de lignes à l'entrée d'adresses de la mémoire, les mots de données binaires peuvent être envoyés par le circuit codeur de trame (2), en synchronisme avec l'horloge à l'entrée de données de la mémoire (4) pour le stockage dans les emplacements mémoire qui ont été adressés.

7. Dispositif selon la revendication 6, caractérisé en ce que pour la mémorisation des mots de données binaires, les compteurs d'adresses (6, 8) ne sont activés que si un décodeur PIC (14) fournit, lorsqu'il y a au moins un modèle PIC dans le signal vidéo, un signal de reconnaissance PIC (PIC OUT) au compteur d'adresses de colonnes.

8. Dispositif selon la revendication 7, caractérisé en ce qu'il est prévu un circuit de sélection d'adresses (12) avant l'entrée d'adresses (10) de la mémoire (4), ce circuit interrompant le processus de mémorisation lors de l'arrivée d'adresses déterminées produites par les compteurs d'adresses (6, 8).

9. Dispositif selon l'une des revendications 5 à 8, caractérisé en ce que la commande d'adresses d'extraction (18 à 28) comporte une commande d'horloge d'extraction (18) pour fournir une cadence de colonnes à un compteur d'adresses d'extraction de colonnes (20), et pour fournir une cadence de lignes à un compteur d'adresses d'extraction de lignes (22), une impulsion de cadence d'extraction de lignes faisant progresser le compteur d'adresses de lignes chaque fois que le compteur d'adresses de colonnes (20) a adressé toutes les colonnes dans la zone partielle d'extraction de la matrice de mémoire, et en ce qu'il est prévu un compteur (24) de décalage d'adresse de départ qui fait progresser l'adresse de départ de la zone partielle d'extraction de la matrice de mémoire, après que le compteur d'adresses de lignes (22) ait reçu un nombre approprié prédéterminé d'impulsions de cadence d'extraction de lignes et que toutes les lignes aient été adressées à l'intérieur de la zone partielle d'extraction de la matrice de mémoire.

10. Dispositif selon la revendication 9, caractérisé en ce que la première adresse de départ que fournit le compteur de décalage (24) peut être programmé dans le compteur de décalage (24) par les compteurs d'adresses d'extraction (6, 8).

11. Dispositif selon la revendication 9 ou la revendication 10, caractérisé en ce que lors du décalage de l'adresse de départ des zones partielles d'extraction de la matrice de mémoire, l'adresse de colonnes n'est, avec une adresse de lignes constante, incrémentée chaque fois que d'une colonne.

FIG.1

FIG.2

0 038 027

FIG. 3

Speicher
Daten EIN
Daten AUS
Raster- codier- schaltung
Zeilen- adressier- zähler
Spalten- adressier- zähler
PIC- Dekoder
Tabelle
System- takt

Daten EIN

Speicher

<u>4</u>

Daten AUS

Auslese-Adressierer Eingang —28

Dekoder ¦16

ASC II
Schnittstelle

Auslese-
takt
Steuerung ¦18

Auslese-
zeilen
Adr.-zähler 22

Auslese-
spalten-
adressierzähler 20

Teilbereich-
fortschaltzähler 24

<u>FIG. 4</u>

Spaltentaktimp.

Zeilentaktimp.

Fortschaltimp.

*FIG. 5*

0 038 027